**Europäisches Patentamt**

**European Patent Office**

**Office européen des brevets**

(19)

(11) Veröffentlichungsnummer : **0 420 834 B1**

(12)                 **EUROPÄISCHE PATENTSCHRIFT**

(45) Veröffentlichungstag der Patentschrift :
30.12.92 Patentblatt 92/53

(51) Int. Cl.⁵ : **B60C 11/04**

(21) Anmeldenummer : **90890246.3**

(22) Anmeldetag : **22.08.90**

(54) **Fahrzeugluftreifen.**

(30) Priorität : **26.09.89 AT 2235/89**

(43) Veröffentlichungstag der Anmeldung :
**03.04.91 Patentblatt 91/14**

(45) Bekanntmachung des Hinweises auf die
Patenterteilung :
**30.12.92 Patentblatt 92/53**

(84) Benannte Vertragsstaaten :
**AT DE FR GB IT**

(56) Entgegenhaltungen :
**DE-A- 3 737 264**
**PATENT ABSTRACTS OF JAPAN, Band 12, Nr.**
**321 (M-736)[3168], 31. August 1988; & JP-A-63**
**90 404 (BRIDGESTONE CORP.)21-01-1988**
**GUMMIBEREIFUNG, Band 64. Nr. 7, Juli 1988,**
**Seite 16, Bielefeld, DE; Yokohama Reifen"**
**PATENT ABSTRACTS OF JAPAN, Band 13, Nr.**
**244 (M-834)[3592], 7. Juni 1989; & JP-A-01 52**
**507 (BRIDGESTONE CORP.) 28-02-1989**

(73) Patentinhaber : **Semperit Reifen**
**Aktiengesellschaft**
**Wienersdorferstrasse 20-24**
**A-2514 Traiskirchen (AT)**

(72) Erfinder : **Arendt, Gernot, Dipl.-Ing.**
**Schlossgasse 4/9**
**A-2512 Tribuswinkel (AT)**
Erfinder : **Lux, Friedrich, Dipl.-Ing.**
**Neunkirchner Strasse 24**
**A-2700 Wiener Neustadt (AT)**

(74) Vertreter : **Vinazzer, Edith**
**Semperit Reifen Aktiengesellschaft**
**Patentabteilung Wienersdorferstrasse 20-24**
**A-2514 Traiskirchen (AT)**

**Beschreibung**

Die Erfindung betrifft einen Fahrzeugluftreifen, welcher ein drehrichtungsgebundenes und in bezug auf den Umfang der Lauffläche asymmetrisches Laufflächenprofil aufweist, das zumindest eine Hauptumfangsnut im Mittelbereich sowie im Außen- und Innenabschnitt jeweils eine Mehrzahl von Quernuten aufweist, die jeweils gemeinsam mit Profilelementen, z.B. Blöcken, sich über den Reifenumfang wiederholende, gleichartige Pitches bilden, wobei die Gesamtpitchanzahl im Außenabschnitt kleiner ist als im Innenabschnitt.

Es ist bereits eine Anzahl von Reifen mit asymmetrischen Laufflächenprofilen vorgeschlagen worden, um mehrere Profileigenschaften besser als mit herkömmlichen Profilen aufeinander abzustimmen. Bei der Anbringung asymmetrischer Reifen auf einem Fahrzeug ist es erforderlich, darauf zu achten, daß jeweils dieselben und auch die richtigen Profilabschnitte der Außen- und Innenseite des Fahrzeuges zugeordnet sind. Ein Reifen mit einem asymmetrischen und gleichzeitig drehrichtungsabhängigen Laufflächenprofil ist aus der gattungsbildenden DE-A- 37 37 264 bekannt. Dieser Reifen besitzt ein geteiltes Reifenprofil mit einer Umfangsmittelnut und zu beiden Seiten dieser Umfangsmittelnut verlaufenden Schrägnuten. In dem einen Teil des Profiles, der bevorzugt an der Fahrzeugaußenseite sein soll, haben die Schrägnuten einen verhältnismäßig großen Teilungsabstand und sind unter einem verhältnismäßig kleinen Winkel zur Umfangsmittellinie geneigt. In der anderen Profilhälfte ist der Teilungsabstand der Schrägnuten verhältnismäßig klein, ihr Neigungswinkel relativ zur Umfangsmittellinie jedoch größer. Somit ist bei diesem bekannten Reifen die Gesamtpitchanzahl im Außenabschnitt kleiner als im Innenabschnitt.

Dieser bekannte Reifen soll ein gutes Handlingverhalten und eine gute Fahrstabilität sowohl auf trockenen als auch auf nassen Straßen aufweisen.

Von einem derartigen Reifen ausgehend hat sich nun die Erfindung die Aufgabe gestellt, Maßnahmen zu setzen, die die Geräuschentwicklung, also das Abrollgeräusch während des Fahrens, weiter herabzusetzen, wobei jedoch die sonstigen Profileigenschaften, wie Stabilität, Handlingverhalten und Aquaplaningverhalten zumindest gleich gut gehalten werden sollen.

Gelöst wird die gestellte Aufgabe erfindungsgemäß dadurch, daß die Quernuten im Außenabschnitt über mindestens 70 % ihrer Länge schmäler sind, als die Quernuten im Innenabschnitt, und daß die Quernuten im Außenabschnitt Konstante Breite aufweisen.

Mit den erfindungsgemäßen Maßnahmen läßt sich ein Laufflächenprofil für einen Fahrzeugluftreifen so gestalten, daß das Abrollgeräusch merklich herabgesetzt ist. Es hat sich vor allem herausgestellt, daß das Vorbeifahrgeräusch durch die nach der Erfindung in den Außenabschnitten der Reifen zu setzenden Maßnahmen merklich herabgesetzt werden kann. Diesbezüglich scheint es wesentlich zu sein, die Quernuten im Außenabschnitt relativ schmal zu gestalten und weiters mit einer konstanten Breite, zumindest jeweils in einzelnen Umfangsbereichen, zu versehen. Da sich diese Maßnahmen auch günstig auf die Stabilität des Profiles auswirken, wird ferner insbesondere das Handlingverhalten positiv beeinflußt.

Auf die seitliche Geräuschabstrahlung während des Fahrens wirkt es sich weiters günstig aus, wenn zumindest die Quernuten im Außenabschnitt einen im wesentlichen V-förmigen Verlauf aufweisen. Bevorzugt sind auch die Quernuten im Innenabschnitt derartig gestaltet.

In diesem Zusammenhang ist es weiters günstig, wenn die zur Profilaußenseite verlaufenden Abschnitte der V-förmigen Quernuten mit der Axialrichtung des Reifens kleinere Winkel einschließen, als die zweiten Quernutabschnitte. Die erstgenannten Abschnitte sollten hiebei an den Profilaußenbereichen möglichst in Meridianrichtung verlaufen.

Das Aquaplaningverhalten wird dann günstig beeinflußt, wenn die Quernuten im Innenabschnitt sich nach außen trompetenförmig erweiternd ausgebildet sind. Dabei ist es weiters von Vorteil, wenn der Innenabschnitt zwei durch eine breite Umfangsnut voneinander getrennte Blockreihen umfaßt.

Die im Mittelbereich vorgesehene Hauptumfangsnut wird vorteilhafterweise entlang der Mittelumfangslinie des Profiles angeordnet. Für das Handlingverhalten ist es dabei günstig, wenn an diese mittlere Hauptumfangsnut im Außenabschnitt ein im wesentlichen kontinuierlich umlaufendes Laufflächenband anschließt, welches vorzugsweise mit in Verlängerung der Quernuten ausgebildeten Sacknuten versehen ist.

Das von Reifen nach der Erfindung emittierte subjektive Gesamtgeräusch wird dadurch minimiert, daß die Pitches im Innen- und im Außenabschnitt mit mindestens drei unterschiedlichen Umfangslängen gewählt werden, die, wie an sich bekannt, über den Reifenumfang jeweils nach einer geräuschoptimierten Pitchfolge angeordnet sind. Gemäß einer bevorzugten Ausführungsform wird dabei im Innenabschnitt die Breite der Quernuten entsprechend mitvariiert.

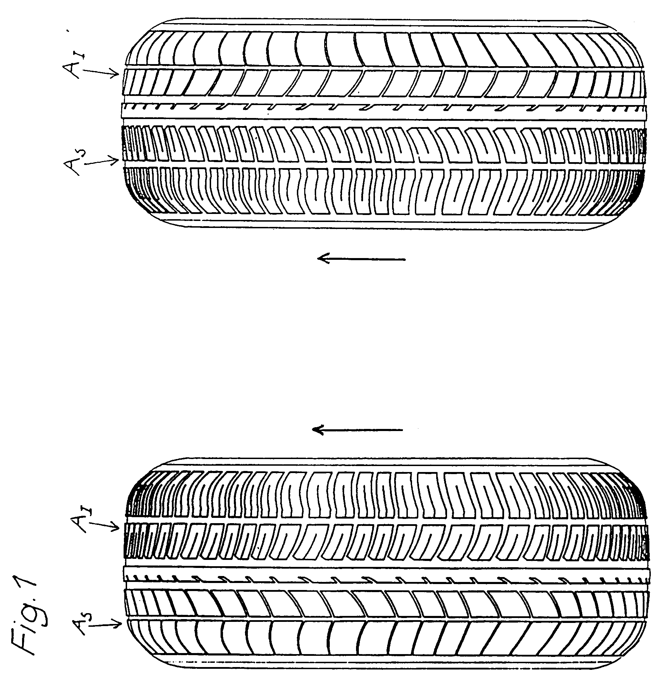

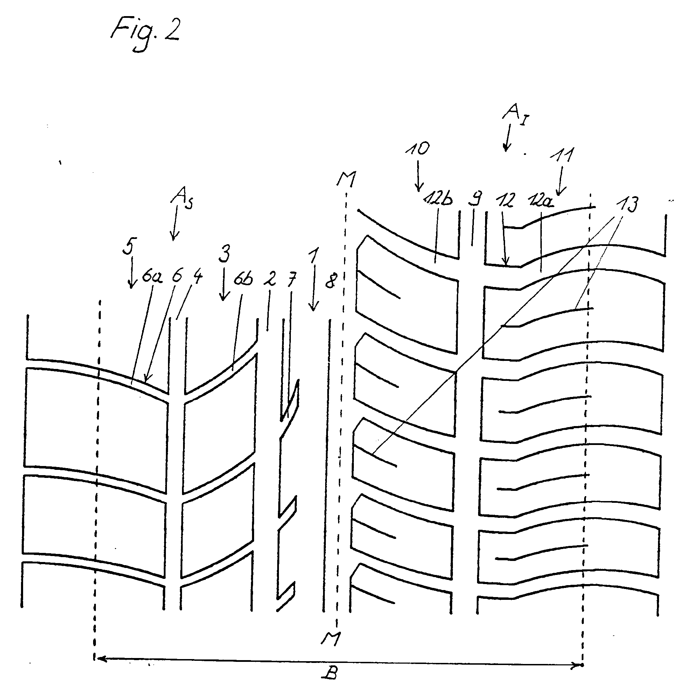

Weitere Merkmale, Vorteile und Einzelheiten der Erfindung werden nun anhand der Zeichnung, die ein Ausführungsbeispiel darstellt, näher beschrieben. Hierbei ist in Fig. 1 ein Luftreifenpaar schematisch in Vorderansicht dargestellt und Fig. 2 zeigt eine Draufsicht auf eine Teilabwicklung des Laufflächenprofiles eines linken Fahrzeugreifens.

Wie aus Fig. 1 ersichtlich ist, sind die Laufflächenprofile des Luftreifenpaares bezüglich der nicht dargestellten Längsachse eines Fahrzeuges symmetrisch gestaltet, die beiden Pfeile versinnbildlichen die Drehrichtung der Reifen. Jeder Reifen des Reifenpaares ist mit einem bezüglich der Mittellinie des Reifens asymmetrischen Laufflächenprofil versehen. Somit weist jeder Reifen einen äußeren Profilabschnitt $A_S$ und einen inneren Profilabschnitt $A_I$ auf.

Zur weiteren Betrachtungsweise der Erfindung wird nun Fig. 2 herangezogen, wo das Laufflächenprofil des am Fahrzeug in Fahrtrichtung links zu montierenden Reifens des Reifenpaares dargestellt ist. Hiebei bezeichnet B die Breite des unter Druck gesetzten Reifens in der Bodenaufstandsfläche, mit M-M ist die Mittelumfangslinie bezeichnet. Entlang der Mittelumfangslinie M-M ist eine breite gerade verlaufende Umfangsnut 8 vorgesehen. Von dieser ausgehend, umfaßt der Außenabschnitt $A_S$ ein Laufflächenband 1, welches durch eine weitere breite Umfangsnut 2 von einer in Umfangsrichtung verlaufenden Blockreihe 3 getrennt ist, die ihrerseits durch eine schmälere Umfangsnut 4 von einer Schulterblockreihe 5 getrennt ist. Die Breite der schmäleren Umfangsnut 4 beträgt ca. 40 bis 70 % der Breite der Umfangsnut 2, die etwa 8 bis 10 mm breit gewählt wird. Die Einzelblöcke der Blockreihen 3 und 5 sind durch Quernuten 6 voneinander getrennt, die einen bezüglich der Umfangsnut 4 V-förmigen Verlauf aufweisen, so daß in der Schulterblockreihe 5 Quernutenabschnitte 6a und in der Blockreihe 3 Quernutenabschnitte 6b verlaufen. Etwa in Verlängerung der Quernutenabschnitte 6b sind im Laufflächenband 1 Sacknuten 7 vorgesehen.

Die Quernutenabschnitte 6a und 6b sind jeweils von konstanter und gleicher Breite. Bevorzugt beträgt die Breite der Quernutenabschnitte 6a, 6b ca. 2 bis 4 mm. Die Breite der Sacknuten 7 ist mindestens so groß wie die Breite der Quernutenabschnitte 6b, bevorzugt jedoch etwas größer.

Der Innenabschnitt $A_I$ des Laufflächenprofiles umfaßt von der Mittelnut 8 ausgehend zwei durch eine weitere breite Umfangsnut 9 voneinander getrennte Blockreihen 10, 11.

Verhältnismäßig breite Quernuten 12 trennen die einzelnen Blöcke der Blockreihen 10, 11 in Querrichtung voneinander. Auch im Innenabschnitt $A_I$ ist ein V-förmiger Querrillenverlauf gewählt, und zwar gleichsinnig zum Verlauf der Quernuten 6 im Außenabschnitt $A_S$. Der durch den V-förmigen bzw. etwa V-förmigen Verlauf der Quernuten 12 bedingte Knick befindet sich jeweils in den die Einzelblöcke der Schulterblockreihe 11 voneinander trennenden Quernutenabschnitten 12a.

Die Quernuten 12 werden von der Mittelumfangslinie M-M aus betrachtet zum Laufflächenrand zu kontinuierlich breiter, wobei die Breite der Quernuten 12 von ca. 4 bis 6 mm auf ca. 6 bis 10 mm zunimmt. Die Quernuten 12 weisen über den Umfang des Profiles betrachtet variierende Breiten auf, was weiter unten noch erläutert wird. Der durch den V-förmigen Verlauf der Quernuten 12 vorliegende stumpfe Winkel ist größer als jener durch den V-förmigen Verlauf der Quernuten 6 im Außenabschnitt $A_S$ gebildete Winkel. Sowohl im Außen- als auch im Innenabschnitt verlaufen die Quernutenabschnitte 6a, 12a flacher als die anderen Abschnitte 6b, 12b, so daß die Abschnitte 6a, 12a mit der Achsialrichtung des Reifens kleinere Winkel einschließen, als die Abschnitte 6b, 12b.

Im Innenabschnitt $A_I$ sind die einzelnen Profilelemente, hier also die Einzelblöcke, mit je einem schmalen Feineinschnitt 13 versehen. Diese Maßnahme wirkt sich günstig auf das Naßhandlingverhalten aus. Aus diesem Grund kann es aber auch vorteilhaft sein, Feineinschnitte im Außenabschnitt $A_S$ anzuordnen.

Der Außenabschnitt $A_S$ weist ferner eine Positivfläche (Fahrfläche) auf, die größer ist als die Positivfläche im Innenabschnitt $A_I$. So beträgt die Positivfläche im Außenabschnitt $A_S$ 65 bis 85 %, bevorzugt etwa 72 % und im Innenabschnitt $A_I$ 55 bis 70 %, bevorzugt etwa 66 %.

Um die Geräuschentwicklung während des Fahrbetriebes gering zu halten ist eine Reihe von Maßnahmen gesetzt worden. Im Außenabschnitt $A_S$ ist die Gesamtpitchanzahl (Gesamtanzahl der über den Reifenumfang angeordneten gleichartigen Profilabschnitte) wesentlich geringer gewählt, als die Gesamtpitchanzahl im Innenabschnitt $A_I$.

Die Gesamtpitchanzahl im Innenabschnitt $A_I$ ist um mindestens 20 % größer als die Gesamtpitchanzahl im Außenabschnitt $A_S$ . Die jeweils gewählte Anzahl von unterschiedlichen Pitches kann sich im Außenabschnitt $A_S$ und im Innenabschnitt $A_I$ ebenfalls voneinander unterscheiden. In diesem Zusammenhang ist es auch günstig, wenn die üblicherweise mittels eines Rechenprogrammes optimierte Abfolge der Pitches über den Reifenumfang im Außenabschnitt $A_S$ unterschiedlich zu jener im Innenabschnitt $A_I$ ist. Für das Vorbeifahrgeräusch hat es sich als besonders günstig herausgestellt, wenn, wie im Ausführungsbeispiel dargestellt, im Außenabschnitt $A_S$ die Breite der Quernutenabschnitte 6a unf 6b über den Reifenumfang konstant gehalten wird, so daß die Pitchlängenvariation durch unterschiedliche Umfangslängen der Einzelblöcke erfolgt, wogegen im Innenabschnitt $A_I$ die Breite der Quernuten 12 mit der Umfangserstreckung der Einzelblöcke mitvariiert wird. Dabei werden Pitchfolgen mit mindestens drei unterschiedlichen Pitchlängen eingesetzt. Im Außenabschnitt $A_S$ können weiters die Quernutenabschnitte 6a, 6b unterschiedlich breit gewählt werden, wobei bevorzugt die Quernutenabschnitte 6b breiter auszuführen sind als die Abschnitte 6a. Es ist ferner auch denkbar, die Quernutenabschnitte innerhalb einer Blockreihe aus zwei Teilabschnitten unterschiedlicher Breite zu gestalten. Es ist jedoch wesentlich, daß die Quernuten 6 zu zumindest 70 % ihrer Länge schmäler sind als die Quernuten 12.

Anstelle der in den Zeichnungsfiguren dargestellten und entlang der Linie M-M verlaufenden Umfangsnut können auch zwei, durch ein Laufflächenband voneinander getrennte Umfangsnuten vorgesehen werden. Die Umfangsnut(en) kann bzw. können gegenüber der Umfangsmittellinie M-M auch seitlich versetzt sein.

## Patentansprüche

1. Fahrzeugluftreifen, welcher ein drehrichtungsgebundenes und in bezug auf den Umfang der Lauffläche asymmetrisches Laufflächenprofil aufweist, das zumindest eine Hauptumfangsnut (8) im Mittelbereich sowie im Fahrzeugbezogenen Außen- und Innenabschnitt ($A_S$ und $A_I$) jeweils eine Mehrzahl von Quernuten (6,12) aufweist, die jeweils gemeinsam mit Profilelementen, z.B. Blöcken (3,5;10,11), sich über den Reifenumfang wiederholende, gleichartige Pitches bilden, wobei die Gesamtpitchanzahl im Außenabschnitt ($A_S$) kleiner ist als im Innenabschnitt ($A_I$), und wobei die äußeren Quernuten (6) jeweils in Umfangsbereichen, die bevorzugt durch Umfangsnuten (4) voneinander getrennt sind, einen konstanten Verlauf aufweisen dadurch gekennzeichnet, daß die Quernuten (6) im Außenabschnitt ($A_S$) über mindestens 70 % ihrer Länge schmäler sind, als die Quernuten (12) im Innenabschnitt ($A_I$), und daß die Quernuten (6) im Außenabschnitt ($A_S$) Konstante Breite aufweisen.

2. Fahrzeugluftreifen nach Anspruch 1, dadurch gekennzeichnet, daß zumindest die Quernuten (6) im Außenabschnitt ($A_S$) einen im wesentlichen V-förmigen Verlauf aufweisen.

3. Fahrzeugluftreifen nach Anspruch 1 oder 2, dadurch gekennzeichnet, daß die zu den Profilrändern hin verlaufenden Abschnitte (6a, 12a) der V-förmigen Quernuten (6, 12) mit der Axialrichtung des Reifens kleinere Winkel einschließen, als die übrigen Quernutenabschnitte (6b, 12b).

4. Fahrzeugluftreifen nach Anspruch 3, dadurch gekennzeichnet, daß die zu den Profilrändern hin verlaufenden Abschnitte (6a, 12a) der Quernuten (6, 12) zumindest im wesentlichen in Axialrichtung verlaufen.

5. Fahrzeugluftreifen nach einem der Ansprüche 1 bis 4, dadurch gekennzeichnet, daß die Quernuten (12) im Innenabschnitt ($A_S$) sich zum Profilrand hin trompetenförmig erweitern.

6. Fahrzeugluftreifen nach einem der Ansprüche 1 bis 5, dadurch gekennzeichnet, daß der Innenabschnitt ($A_I$) zwei durch eine breite Umfangsnut (9) voneinander getrennte Blockreihen (10, 11) aufweist.

7. Fahrzeugluftreifen nach einem der Ansprüche 1 bis 6, dadurch gekennzeichnet, daß eine einzige Hauptumfangsnut (8), die entlang der Mittellinie M-M verläuft, vorgesehen ist.

8. Fahrzeugluftreifen nach einem der Ansprüche 1 bis 7, dadurch gekennzeichnet, daß an die im Mittelbereich vorgesehene Hauptumfangsnut(en) (8) im Außenabschnitt ($A_S$) ein im wesentlichen kontinuierlich umlaufendes Laufflächenband (1) anschließt, welches mit in Verlängerung der äußeren Quernuten (6) ausgebildeten Sacknuten (7) versehen ist.

9. Fahrzeugluftreifen nach einem der Ansprüche 1 bis 8, dadurch gekennzeichnet, daß die Pitches im Innen-und im Außenabschnitt mit mindestens drei unterschiedlichen Umfangslängen gewählt werden, die, wie an sich bekannt, über den Reifenumfang jeweils nach einer geräuschoptimierten Pitchfolge angeordnet sind.

10. Fahrzeugluftreifen nach einem der Ansprüche 1 bis 9, dadurch gekennzeichnet, daß die Breite der Quernuten (12) im Innenabschnitt ($A_I$) entsprechend der Pitchlängenvariation im Innenabschnitt mitvariiert ist.

11. Fahrzeugluftreifen nach einem der Ansprüche 1 bis 10, dadurch gekennzeichnet, daß zumindest die Profilelemente (10,11) im Innenabschnitt ($A_I$) mit schmalen Feineinschnitten (13) versehen sind.

## Claims

1. Pneumatic vehicle tyre, which has a tread surface profile adapted to the direction of rotation, which profile is asymmetrical with respect to the circumference of the tread surface and has at least one main circumferential groove (8) in the central region and a plurality of transverse grooves (6, 12) in each of the outer and inner portions ($A_S$ and $A_I$) with respect to the vehicle, the transverse grooves each forming identical pitches, which are repeated over the tyre circumference, together with profile elements, e.g. blocks (3, 5; 10, 11), the total number of pitches in the outer portion ($A_S$) being less than that in the inner portion ($A_I$), and wherein the outer transverse grooves (6) each have a constant configuration in circumferential regions, which are preferably separated from one another by means of circumferential grooves (4), characterised in that the transverse grooves (6) in the outer portion ($A_S$) are narrower over at least 70 % of their length than the transverse grooves (12) in the inner portion ($A_I$), and in that the transverse grooves (6) in the outer portion ($A_S$) have a constant width.

2. Pneumatic vehicle tyre according to claim 1, characterised in that at least the transverse grooves (6) in the outer portion ($A_S$) have a substantially V-shaped configuration.

3. Pneumatic vehicle tyre according to claim 1 or 2, characterised in that the portions (6a, 12a) of the V-shaped transverse grooves (6, 12), extending towards the profile edges, form with the axial direction of the tyre smaller angles than the other transverse groove portions (6b, 12b).

4. Pneumatic vehicle tyre according to claim 3, characterised in that the portions (6a, 12a) of the transverse grooves (6, 12), extending towards the profile edges, extend at least substantially in the axial direction.

5. Pneumatic vehicle tyre according to one of claims 1 to 4, characterised in that the transverse grooves (12) in the inner portion ($A_I$) widen in a trumpet-like manner towards the profile edge.

6. Pneumatic vehicle tyre according to one of claims 1 to 5, characterised in that the inner portion ($A_I$) has two rows of blocks (10, 11), which are separated from each other by means of one wide circumferential groove (9).

7. Pneumatic vehicle tyre according to one of claims 1 to 6, characterised in that one single main circumferential groove (8) is provided, which extends along the centre axis M-M.

8. Pneumatic vehicle tyre according to one of claims 1 to 7, characterised in that a tread surface strip (1), which extends substantially continuously, communicates with the main circumferential groove(s) (8) formed in the central region of the outer portion ($A_S$) and is provided with blind grooves (7), which are formed as an extension of the outer transverse grooves (6).

9. Pneumatic vehicle tyre according to one of claims 1 to 8, characterised in that the pitches in the inner and outer portions are selected to have at least three different circumferential lengths which, as is known per se, are each disposed over the tyre circumference according to a noise-optimised pitch sequence.

10. Pneumatic vehicle tyre according to one of claims 1 to 9, characterised in that the width of the transverse grooves (12) in the inner portion ($A_I$) is jointly varied according to the variation in the pitch length in the inner portion.

11. Pneumatic vehicle tyre according to one of claims 1 to 10, characterised in that at least the profile elements (10, 11) in the inner portion ($A_I$) are provided with narrow fine incisions (13).

**Revendications**

1. Bandage pneumatique pour véhicules dont le profil de sa surface de roulement est lié au sens de la rotation et asymétrique par rapport à la périphérie de la surface de roulement, qui présente au moins une rainure périphérique principale (8) dans sa région centrale ainsi qu'une pluralité de rainures transversales (6, 12) dans sa section externe ($A_S$) et dans sa section interne ($A_I$) par rapport au véhicule, qui forment des pas égaux avec des éléments de profil tels que des blocs se répétant sur la périphérie du bandage pneumatique, le nombre total des pas étant plus petit dans la section externe ($A_S$) que dans la section interne ($A_I$), et dans lequel les rainures transversales externes (6) sont de forme constante dans des régions périphériques qui sont de préférence séparées les unes des autres par des rainures périphériques (4), caractérisé en ce que les rainures transversales (6) de la section externe ($A_S$) sont plus étroites sur au moins 70% de leur longueur que les rainures transversales (12) de la section interne ($A_I$), et en ce que les rainures transversales (6) de la section externe ($A_S$) sont de largeur constante.

2. Bandage pneumatique pour véhicules selon la revendication 1, caractérisé en ce que les rainures transversales (6) au moins de la section externe ($A_S$) ont sensiblement la forme d'un V.

3. Bandage pneumatique pour véhicules selon la revendication 1 ou 2, caractérisé en ce que les sections (6a, 12a) des rainures transversales en V (6, 12) qui sont dirigées vers les bords du profil forment avec la direction axiale du pneumatique un angle plus petit que celui formé par les autres sections de rainures transversales (6b, 12b).

4. Bandage pneumatique pour véhicules selon la revendication 3, caractérisé en ce que les sections (6a, 12a) des rainures transversales (6, 12) qui sont orientées vers les bords du profil sont disposées au moins sensiblement en direction axiale.

5. Bandage pneumatique pour véhicules selon l'une quelconque des revendications 1 à 4, caractérisé en ce que les rainures transversales (12) de la section interne ($A_S$) vont en s'élargissant en forme de trompettes en direction du bord du profil.

6. Bandage pneumatique pour véhicules selon l'une quelconque des revendications 1 à 5, caractérisé en ce que la section interne ($A_I$) comprend deux rangées de blocs (10, 11) séparées l'une de l'autre par une large rainure périphérique (9).

7. Bandage pneumatique pour véhicules selon l'une quelconque des revendications 1 à 6, caractérisé en ce qu'il est prévu une unique rainure périphérique principale (8) le long de la ligne centrale (M-M).

8. Bandage pneumatique pour véhicules selon l'une quelconque des revendications 1 à 7, caractérisé en ce que la ou les rainures périphériques principales (8) prévues dans la région centrale limitent dans la section externe ($A_S$) une bande de surface de roulement (1) périphérique et sensiblement continue, qui est munie de rainures borgnes (7) constituées dans le prolongement des rainures transversales externes (6).

9. Bandage pneumatique pour véhicules selon l'une quelconque des revendications 1 à 8, caractérisé en ce que les pas dans la section interne et dans la section externe sont choisis avec au moins trois longueurs périphériques différentes qui, ainsi que cela est connu en soi, sont disposées sur la périphérie du pneumatique selon une succession de pas qui est optimale pour les bruits.

10. Bandage pneumatique pour véhicules selon l'une quelconque des revendications 1 à 9, caractérisé en ce que la largeur des rainures transversales (12) de la section interne ($A_I$) varie de façon correspondante à la variation de la longueur du pas dans la section interne.

11. Bandage pneumatique pour véhicules selon l'une quelconque des revendications 1 à 10, caractérisé en ce qu'au moins les éléments de profil (10, 11) de la section interne ($A_I$) sont munis de fines entailles (13).

Fig. 1

Fig. 2